# FASCICULE DE BREVET EUROPEEN

(11) **EP 3 452 309 B1**
(45) Date de publication et mention de la délivrance du brevet: **01.07.2020**
(21) Numéro de dépôt: 17725715.1
(22) Date de dépôt: 04.05.2017
(51) Int. Cl.: B60C 15/02, B60B 21/12, B60B 21/10, B60B 25/12, B60B 33/00, B60B 25/04

(54) **EXTENSEUR POUR ENSEMBLE ROULANT ET ENSEMBLE ROULANT LE COMPRENANT**
ADAPTER FÜR EINE ANORDNUNG MIT RÄDERN UND ANORDNUNG MIT RÄDERN DAMIT
ADAPTER FOR A ROLLING ASSEMBLY AND ROLLING ASSEMBLY COMPRISING SAME

(30) Priorité: 04.05.2016 FR 1654068; 13.06.2016 FR 1655413
(43) Date de publication de la demande: 13.03.2019
(73) Titulaire: Compagnie Générale des Etablissements Michelin, 63000 Clermont-Ferrand (FR)
(72) Inventeur: MERINO, José, 63040 Clermont-Ferrand Cedex 9 (FR); AHOUANTO, Michel, 63530 Enval (FR); BESTGEN, Luc, 63040 Clermont-Ferrand Cedex 9 (FR); HINC, Henri, 63040 Clermont-Ferrand Cedex 9 (FR); PINEAU, Jacky, 63040 Clermont-Ferrand Cedex 9 (FR); TOPIN, Arthur, 63040 Clermont-Ferrand Cedex 9 (FR)
(74) Mandataire: Noel, Luminita
(86) Numéro de dépôt international: PCT/FR2017/051070
(87) Numéro de publication internationale: WO 2017/191417

(56) Documents cités:
- WO-A1-2015/091620
- WO-A1-2015/165638
- FR-A1- 3 026 054

## Description

### Domaine de l'invention

L'invention a pour objet un extenseur pour un ensemble roulant destiné à équiper un véhicule de tourisme. Un pneumatique comprend deux bourrelets destinés à être montés sur des sièges. Elle a également pour objet ledit ensemble roulant, constitué par un pneumatique, une jante et deux extenseurs assurant la liaison entre les deux bourrelets du pneumatique montés sur les sièges aménagés sur l'extenseur et la jante.

Un pneumatique, une jante, ainsi qu'un extenseur dont il est question dans la présente invention sont usuellement décrits par une représentation dans un plan méridien, c'est-à-dire un plan contenant l'axe de rotation du pneumatique. Tous ces produits (un pneumatique, une jante, un extenseur) sont des objets ayant une géométrie de révolution par rapport à leur axe de rotation. Les directions radiale et axiale désignent respectivement les directions, la première, perpendiculaire à l'axe de rotation du pneumatique, et la seconde, parallèle à l'axe de rotation du pneumatique. Dans ce qui suit, les expressions « radialement », et « axialement » signifient respectivement « selon une direction radiale », et « selon la direction axiale ». Les expressions « radialement intérieur, respectivement radialement extérieur » signifient « plus proche, respectivement plus éloigné, de l'axe de rotation du pneumatique, selon une direction radiale ». Un plan médian est un plan perpendiculaire à l'axe de rotation du pneumatique, positionné axialement de façon à couper la surface de la bande de roulement sensiblement à mi-distance des bourrelets d'un pneumatique. Les expressions « axialement intérieur, respectivement axialement extérieur » signifient « plus proche, respectivement plus éloigné, du plan médian du pneumatique, selon la direction axiale ». Les expressions « radialement intérieur, respectivement radialement extérieur » signifient « plus proche, respectivement plus éloigné, de l'axe de rotation, selon la direction radiale ». Enfin, rappelons encore que, par « coupe radiale » ou « section radiale », on entend une coupe ou une section selon un plan qui contient l'axe de rotation de la jante (et du pneumatique dont celle-ci est équipée).

### État de la technique

De façon générale, un pneumatique comprend une bande de roulement, destinée à entrer en contact avec un sol, deux flancs prolongeant radialement vers l'intérieur les extrémités axiales de la bande de roulement et deux bourrelets prolongeant radialement vers l'intérieur les deux flancs et destinés à entrer en contact avec une jante.

Dans le document WO2016/046197, il est proposé d'insérer un extenseur flexible entre un bourrelet de pneumatique et une jante. Le lecteur se reportera par exemple à la figure 5 de ce document pour prendre connaissance d'un ensemble roulant appartenant au domaine de l'invention. On y voit un ensemble roulant comprenant un pneumatique, une jante et deux extenseurs identiques. En considérant les conventions de langage rappelées ci-dessus, et en se reportant à la façon dont on monte sur une jante un tel extenseur, un tel extenseur comprend, axialement de l'intérieur vers l'extérieur, une extrémité axialement intérieure appelée bourrelet d'extenseur et destinée à assurer l'accrochage de l'extenseur sur la jante. Un tel extenseur comprend aussi une extrémité axialement extérieure destinée à recevoir un bourrelet de pneumatique. Un corps relie les deux extrémités respectivement axialement intérieure et axialement extérieure. Un autre exemple d'extenseur est décrit dans le document FR 3 026 054.

Lorsque l'on désire utiliser un extenseur flexible afin d'augmenter la capacité d'un ensemble roulant de franchir sans dommage et/ou avec un confort de roulement très augmenté des nids de poule de profondeur importante, pour un pneumatique de diamètre et de largeur donnés (mesuré selon la norme ETRTO - European Tyre and Rim Technical Organization), on utilise une jante de diamètre plus petit de 1 pouce, et de largeur plus faible que ce que l'on utiliserait pour monter directement ce même pneumatique. Dans la plupart des cas, on utilise deux extenseurs flexibles identiques, comme montré à la figure 5 du document précédemment cité.

Un ensemble roulant, équipé de deux extenseurs tels que décrit dans le document précédemment cité, assure les principales fonctions d'un ensemble roulant classique, dans lequel le pneumatique est monté directement sur sa jante recommandée, et procure en outre de meilleures performances en endurance en utilisation sur des routes dégradées.

Un tel extenseur peut être réalisé en matière élastomérique renforcée, en reprenant les technologies de fabrication bien connues pour les pneumatiques. Notamment, la géométrie finale de l'extenseur, c'est-à-dire ses dimensions et surfaces apparentes, sont obtenues par moulage dans un moule en plusieurs pièces permettant le démoulage, et dans le cas d'une fabrication en caoutchouc, le démoulage est effectué après vulcanisation du caoutchouc.

Comme enseigné par l'état de la technique, la maitrise des dimensions et de la forme de l'extenseur est importante pour obtenir une bonne stabilité de l'ensemble roulant, donc notamment un montage stable du pneumatique sur l'extenseur dans toutes les conditions de roulage pour lesquelles cet ensemble est conçu.

Par ailleurs, si l'on se donne pour objectif industriel de respecter l'ensemble des normes de formes et de dimensions existant pour les pneumatiques, afin de ne pas dé-standardiser ceux-ci, et si l'on se donne aussi pour contrainte de respecter les normes de formes et de dimensions existant pour les jantes, afin de conserver le bénéfice de la bonne tenue du montage d'un extenseur sur une jante, on est conduit à retenir un écart d'un pouce supplémentaire entre le diamètre du siège aménagé sur la jante et le diamètre de pneumatique pour former un ensemble roulant tel que proposé dans l'état de la technique. C'est ainsi que l'extenseur créé selon l'enseignement de l'état de la technique comporte des zones en contredépouille selon une direction parallèle à l'axe de rotation, ce qui conduit à un démoulage complexe.

Les inventeurs se sont aperçu que, malgré les hautes contraintes découlant des objectifs ci-dessus, étant rappelé qu'un ensemble roulant est un produit de sécurité, il est cependant possible de définir des conditions de forme de l'extenseur qui ne présentent pas de contredépouilles, permettent de réaliser des ensembles roulants dans lesquels il y a un écart d'un pouce entre le diamètre nominal du pneumatique et le diamètre nominal du siège aménagé sur jante, et de permettre un démoulage aisé selon une direction de démoulage (la direction de l'axe de rotation de l'extenseur).

### Description brève de l'invention

L'invention a donc pour objet un extenseur flexible pour ensemble roulant, ledit ensemble roulant comprenant un pneumatique ayant deux bourrelets, une jante et au moins un extenseur destiné à assurer une liaison flexible radialement entre l'un des bourrelets et la jante, ladite jante ayant deux sièges sur jante, chaque siège sur jante étant prolongé axialement vers l'extérieur par un rebord de jante, ledit siège sur jante ayant un diamètre D3, ledit extenseur formant une pièce de révolution d'axe de rotation DD', ledit extenseur comprenant une extrémité axialement intérieure destinée à être montée sur l'un desdits sièges sur jante et destinée à être immobilisé axialement contre le rebord de jante adjacent, ledit extenseur comprenant une extrémité axialement extérieure et un corps orienté principalement axialement et disposé entre ladite extrémité axialement extérieure et ladite extrémité axialement intérieure, ledit corps ayant une face radialement extérieure et une face radialement intérieure, ladite extrémité axialement intérieure ayant une face axialement extérieure sensiblement perpendiculaire à l'axe de rotation DD', ladite extrémité axialement extérieure formant un épaulement sensiblement perpendiculaire à l'axe de rotation DD', ledit extenseur ayant un siège sur extenseur destiné à recevoir un bourrelet de pneumatique, ledit siège sur extenseur étant défini par une base et un épaulement, ledit épaulement étant formé essentiellement par la face axialement intérieure de ladite extrémité axialement extérieure, ladite base étant formée sur la face radialement extérieure du corps, à l'extrémité axialement extérieure de celle-ci, l'intersection entre ladite base et ledit épaulement formant un cercle de diamètre D1, le diamètre D1 étant appelé diamètre de siège sur extenseur, caractérisé en ce que la différence « d » entre les diamètres D1 et D3, d=D1-D3, est comprise entre 25,9 mm et 30,4 mm.

Tout d'abord, par souci de clarté, précisons que le cercle introduit ci-dessus et auquel revoit la revendication principale du présent document, à savoir le cercle formé par l'intersection entre ladite base et ledit épaulement définissant le siège sur extenseur, est en général un cercle virtuel formé par le prolongement axialement vers l'extérieur de ladite base et le prolongement radialement vers l'intérieur dudit épaulement, car en pratique la transition entre ladite base et ledit épaulement est formé, dans le plan méridien, par un congé de raccordement. La cote D1, est ainsi parfaitement définie. Par ailleurs, on peut rappeler que, en ce qui concerne plus généralement la forme de la surface extérieur de l'extrémité axialement intérieure de l'extenseur, l'homme du métier applique ses connaissances générales relatives aux bourrelets des pneumatiques, ce qui le conduit au choix de la cote D3, et d'autres paramètres permettant un montage correct avec serrage correct sur le siège sur jante. Les diamètres D3 (diamètre de siège sur jante) et D1 (diamètre de siège sur extenseur) étant choisis en respectant la règle proposée par la présente invention, dans le dimensionnement d'un extenseur, l'homme du métier choisit ensuite la largeur L de l'extenseur.

Comme connu en soi, la base dudit siège sur extenseur forme une face sensiblement tronconique d'angle a, la valeur de celui-ci étant principalement la conséquence des choix de valeurs pour les diamètres D1, D3 et la largeur L de l'extenseur, ladite largeur étant mesurée entre la face axialement intérieure de l'extrémité axialement extérieure et la face axialement extérieure de l'extrémité axialement intérieure dudit extenseur. De façon avantageuse, l'angle α est compris entre 0,5° et 10°, et préférentiellement compris entre 5° et 8°. De façon avantageuse, ladite largeur L est comprise entre 35 et 45 mm.

L'invention amène donc une amélioration notable dans le processus de fabrication de par le démoulage plus aisé de l'extenseur, dû à l'absence de contre-dépouille, de par l'adoption de valeurs d'angle α non classiques, plus grandes que dans les réalisations connues de l'état de la technique. En outre, on a constaté que l'invention permet aussi une excellente tenue du pneumatique sur l'extenseur, car un extenseur conçu de cette façon procure des pressions de serrage importantes entre bourrelet du pneumatique et siège sur extenseur. Cet avantage est intéressant car il procure une excellente performance dite d'anti-décoincement, sans avoir recours à des composants supplémentaires pour augmenter les pressions de serrage sur les bourrelets du pneumatique.

### Description des Figures

L'invention est décrite ci-après à l'aide des figures 1 à 3, non nécessairement à l'échelle et sont donnés uniquement à titre d'illustration :
- la figure 1 est une coupe radiale d'un extenseur selon l'invention, non monté,
- la figure 2 est une coupe radiale d'un extenseur selon l'invention, non monté, superposé sur un extenseur selon l'état de la technique,
- la figure 3 est une coupe radiale d'un moule permettant le moulage de trois extenseurs selon l'invention,
- la figure 4 est une demi-coupe radiale d'un ensemble selon l'invention, avec changement de forme dû à la charge.

### Description détaillée de l'invention

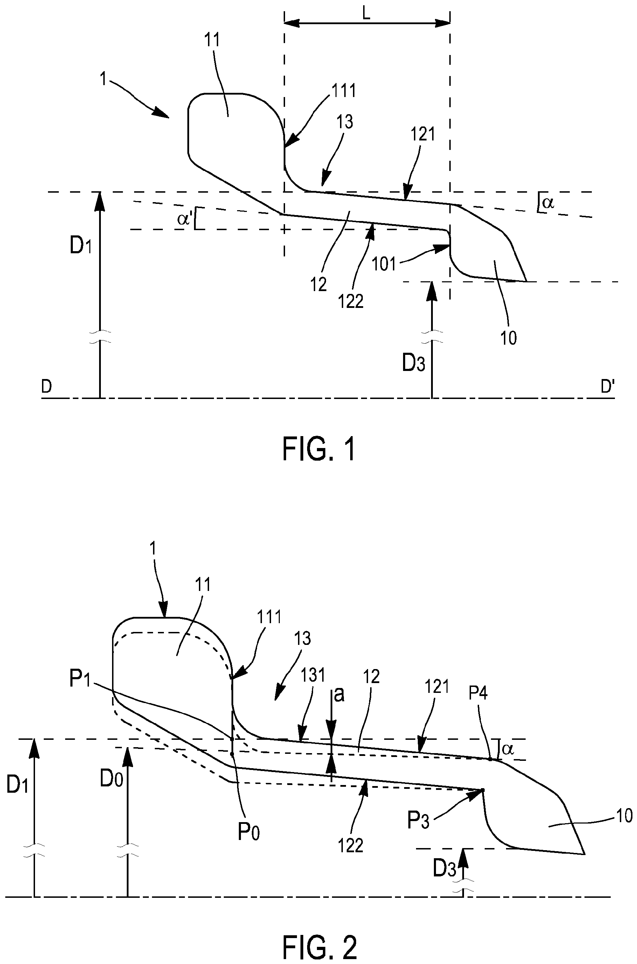

La figure 1 représente une coupe radiale d'un extenseur 1 selon l'invention. Il comporte une extrémité axialement intérieure 10 destinée à être montée sur l'un desdits sièges sur jante. Il comporte une extrémité axialement extérieure 11 et corps 12 orienté sensiblement axialement et disposé entre ladite extrémité axialement extérieure 11 et ladite extrémité axialement intérieure 10. Le corps 12 a une face radialement extérieure 121 et une face radialement intérieure 122 ; ladite extrémité axialement intérieure 10 a une face axialement intérieure 101 sensiblement perpendiculaire à l'axe de rotation DD' ; ladite extrémité axialement extérieure 11 présente un épaulement 111 formant en partie une face sensiblement perpendiculaire à l'axe de rotation DD'. Le corps 12 a une largeur L mesurée entre la face axialement intérieure 101 et la face axialement extérieure 111. Ledit extenseur 1 comporte un siège sur extenseur 13, défini par une base 131 et un épaulement 111. On voit que l'épaulement 111 est formé essentiellement par la face axialement intérieure de ladite extrémité axialement extérieure 11, et que la base 131 est formée sur la face radialement extérieure 121 du corps 12, à l'extrémité axialement extérieure de celle-ci.

La base 131 forme une face sensiblement tronconique d'angle a. Sur une coupe radiale de l'extenseur selon l'invention, telle que celle de la figure 2, en prolongeant la trace de l'épaulement 111 de l'extrémité axialement extérieure 11 radialement vers l'intérieur et en prolongeant la trace de la face sensiblement tronconique de la base 131 axialement vers l'extérieur, on obtient un point P1 qui est la trace d'un cercle de diamètre D1 (par convention, les figures 1 et 2 font toujours apparaitre des demi-diamètres). A la même figure 2, on voit un point P0 correspondant au diamètre D0 qui lui-même correspond au diamètre du pneumatique de l'ensemble roulant utilisant l'extenseur 1 selon l'invention. On lit aussi une cote « a » qui est la demi-différence entre les diamètres D1 et D0.

De façon préférentielle, la différence «d» entre les diamètres D1 et D3, d=D1-D3, est comprise entre 27,8 mm et 30 mm. De façon générale, l'angle α est supérieur à 0,5° (c'est-à-dire 1/2 degré d'angle, soit 30 minutes d'angle) et est inférieur à 10° ; de préférence, l'angle α est supérieur à 1°, et de façon plus avantageuse encore, l'angle α est compris 2,5<α<6°.

De façon avantageuse, la face radialement intérieure 122 étant une face sensiblement tronconique d'angle α', l'extenseur 1 selon l'invention est tel que la différence entre l'angle α et l'angle α' est inférieure à 2°. De préférence, l'angle α' est identique à l'angle a.

Dans l'exemple illustrant l'invention, la largeur L de l'extenseur vaut environ 38 mm et la différence D1-D3 vaut 28 mm. L'extenseur étant réalisé de façon à ce qu'il soit flexible (par exemple, en matière élastomérique renforcée par des tringles et une ou des couches de renforcement formées par un arrangement de câbles parallèles à l'axe de rotation, moyens techniques bien connu de l'homme du métier dans le domaine du pneumatique), il convient que la largeur minimale soit suffisante pour que, lorsque l'ensemble pneumatique, extenseur et jante est monté, prêt à fonctionner, le bourrelet du pneumatique soit axialement à l'extérieur du rebord de jante, pour permettre le déplacement radial du bourrelet du pneumatique monté sur le siège sur extenseur.

Examinons plus en détail comment construire un profil vu en coupe méridienne d'un extenseur selon l'invention. On se base sur les normes de l'ETRTO donnant les diamètres de siège sur jante, dont un extrait est donné dans le tableau suivant :

**DIAMETERS - CODE 10 to 28 on 5^{e} DROP-CENTRE RIMS**

| NOMINAL DEAMETER CODE | 10 | 12 | 13 | 14 | 15 | 16 | 17 | 18 | 19 | 20 | 21 | 22 | 23 | 24 | 25 | 26 | 28 |
|---|---|---|---|---|---|---|---|---|---|---|---|---|---|---|---|---|---|
| SPECIFIED DIAMETER D (mm) | 253.2 | 304.0 | 329.4 | 354.8 | 380.2 | 405.6 | 436.6 | 462.0 | 487.4 | 512.8 | 538.2 | 563.6 | 589.0 | 614.4 | 639.8 | 665.2 | 716.0 |

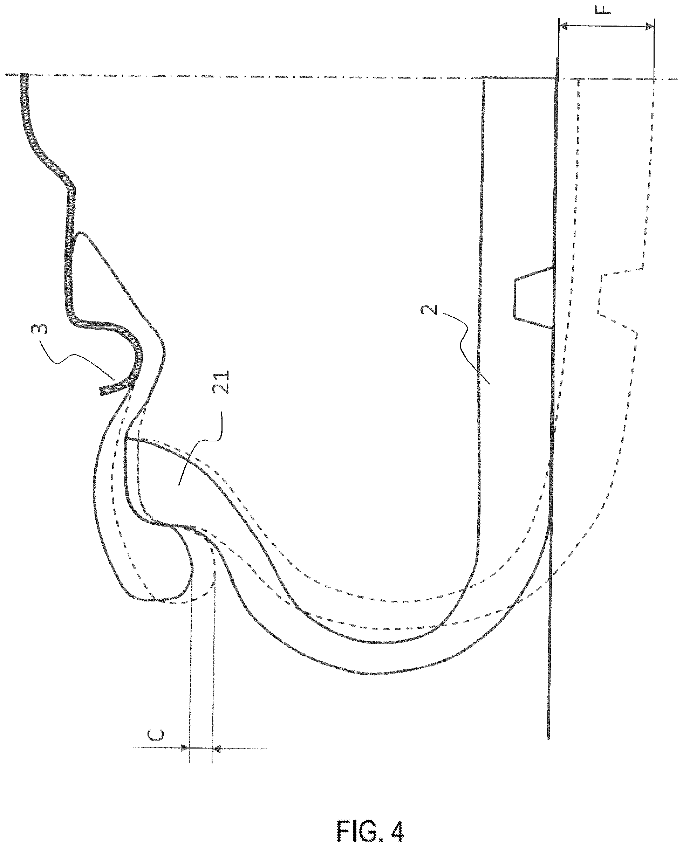

A la figure 2, on a représenté en trait continu un extenseur selon l'invention et, en trait discontinu, superposé à l'extenseur selon l'invention, un extenseur selon l'état de la technique et qui lui est directement comparable, c'est-à-dire conçu pour recevoir un même pneumatique et être monté sur une même jante, tel que par exemple illustré à la figure 5 de la demande de brevet WO2016/46197 précitée. Dans l'exemple de l'invention, il s'agit d'utiliser un pneumatique 2 dont le diamètre au siège est de 18' et une jante 3 dont le diamètre de siège sur jante 31 est de 17' (voir figure 4). On voit à la figure 2 le point P0 à l'intersection du prolongement de l'épaulement 111 et du prolongement de la base (tronconique) du siège sur extenseur de l'état de la technique, ou, ce qui est équivalent, du siège sur jante qui serait de diamètre D0 valant 18'. Ayant marqué le point P0, on détermine, sur une droite radiale comprenant le point P0, le point P1 situé à un rayon plus élevé de la valeur « a ». Ce point établit un diamètre de siège sur extenseur 13 valant D1=D0+2a, avec a compris entre 0,5mm et 5mm. L'extrémité axialement intérieure 10 de l'extenseur 1 est par exemple de diamètre D3 valant 17' et l'extrémité axialement extérieure 11 de l'extenseur 1 est par exemple de diamètre D1 valant 18'+4mm. La cote «a» représente l'augmentation du demi-diamètre du siège sur extenseur 13 de l'extenseur 1 par rapport au demi-diamètre D1 du pneumatique que l'on monte sur un tel extenseur. A partir de ce point surélevé de la cote « a », et compte tenu de l'épaisseur de l'extenseur 1 sous le siège sur extenseur 13, le profil de la face radialement intérieure 122 (voir figure 1), plus particulièrement l'angle α' (voir figure 1), est ajusté pour rejoindre le profil d'un extenseur selon l'état de la technique sensiblement au point P3, c'est-à-dire au point où le corps 12 rejoint l'extrémité axialement intérieure 10 de l'extenseur. Similairement, le profil de la face radialement extérieure 121, plus particulièrement l'angle a, est ajusté pour rejoindre le profil d'un extenseur selon l'état de la technique au point P4, c'est-à-dire le point où lorsque le corps 12 rejoint l'extrémité axialement intérieure 10.

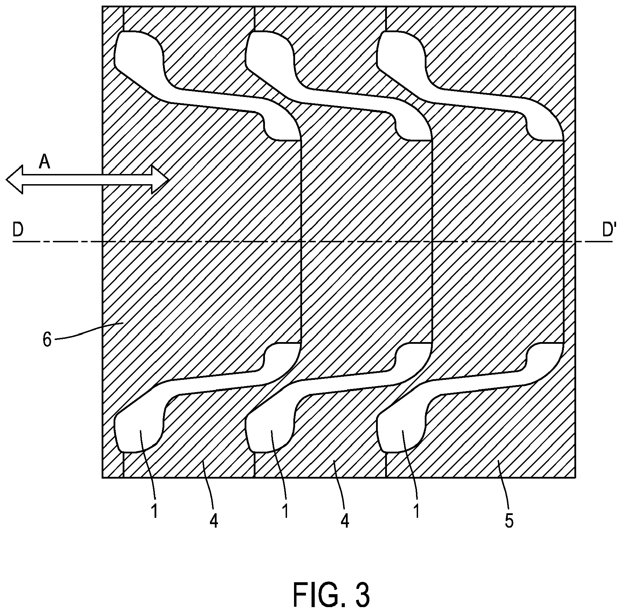

A la figure 3, on voit un moule composé de plusieurs pièces 4, 5, 6 qui peuvent se déplacer selon une même direction A parallèle à l'axe DD'. Ce moule permet de mouler simultanément trois extenseurs 1 selon l'invention, avec une facilité de démoulage assurée par la valeur des angles angle α et α'.

Le montage d'un extenseur 1 selon l'invention est similaire au montage d'un extenseur connu dans l'état de la technique. Une fois le montage effectué, le bourrelet 21 du pneumatique 2 impose une contraction circonférentielle de l'extenseur 1 selon l'invention. Celui-ci se retrouve donc dans la même configuration que celle illustrée par exemple à la figure 5 de la demande de brevet WO2016/46197 précitée. A titre d'exemple, pour un pneumatique 245/40-18 (c'est-à-dire de diamètre D1 = 18 pouces), associé à une jante 6B17 (c'est-à-dire de largeur 6 pouces, crochet B, diamètre 17 pouces, selon la norme ETRTO), on utilise deux extenseurs 1 dont le diamètre au siège sur extenseur 13 est de 18 pouces + 7 mm (mesuré à l'intersection du profil de la face radialement extérieure 121 et de l'épaulement 111) et une largeur L = 35,5mm.

La figure 4 rappelle, en trait discontinu, la forme d'un ensemble selon l'invention en position monté, gonflé est sans autres déformations que celles résultant de la pression de gonflage, en trait plein le même ensemble écrasé sous charge nominale. On a vu que l'invention se rapporte aux extenseurs flexibles. On entend par là que qu'il permet, dans le sens radial, un débattement entre le bourrelet 21 du pneumatique 2 et la jante 3 d'au moins 5 % (voir débattement C à la figure 4) de la flèche (voir valeur F à la figure 4) du pneumatique 2 écrasé à charge et pression recommandées. En fonctionnement normal, ces déformations (élastiques) sont annulées si l'on supprime les contraintes ou forces qui en sont la cause.

Dans la plupart des mises en œuvre de l'invention, ledit ensemble roulant comprend un pneumatique et deux extenseurs destinés chacun à assurer la jonction entre l'un des bourrelets et la jante ; les deux extenseurs sont identiques, ce qui fait qu'il suffit d'en montrer et d'en décrire un seul. L'invention s'étend aussi à un ensemble roulant comprenant un pneumatique 2 ayant deux bourrelets 21, une jante 3 et au moins un extenseur 1 destiné à assurer la jonction entre l'un des bourrelets 21 et la jante 3, le bourrelet de pneumatique ayant un diamètre D0, ladite jante 3 ayant deux sièges sur jante 31, chaque siège sur jante 31 étant prolongé axialement vers l'extérieur par un rebord de jante 32, ledit siège sur jante ayant un diamètre D3, ledit extenseur formant une pièce de révolution d'axe de rotation DD', ledit extenseur comprenant une extrémité axialement intérieure 10 destinée à être montée sur l'un desdits sièges sur jante et destinée à être immobilisé axialement contre le rebord de jante adjacent 32, ledit extenseur comprenant une extrémité axialement extérieure 11 et un corps 12 orienté principalement axialement et disposé entre ladite extrémité axialement extérieure 11 et ladite extrémité axialement intérieure 10, ledit corps 12 ayant une face radialement extérieure 121 et une face radialement intérieure 122, ladite extrémité axialement intérieure 10 ayant une face axialement extérieure 101 sensiblement perpendiculaire à l'axe de rotation DD', ledit extenseur ayant un siège sur extenseur 13 destiné à recevoir un bourrelet de pneumatique, ledit siège sur extenseur 13 étant défini par une base 131 et un épaulement 111, ledit épaulement 111 étant formé essentiellement par la face axialement intérieure de ladite extrémité axialement extérieure 11, ladite base 131 étant formée sur la face radialement extérieure 121 du corps 12, à l'extrémité axialement extérieure de celle-ci, l'intersection entre ladite base 131 et ledit épaulement 111 formant un cercle de diamètre D1, caractérisé en ce que la différence « d » entre les diamètres D1 et D3, d=D1-D3, est comprise entre 25,9 mm et 30,4 mm. Toutes les caractéristiques indiquées ci-dessus, pour préciser certains aspects et expliciter des variantes avantageuses ou préférées de l'extenseur sont bien entendu applicables quand l'extenseur est un élément de l'ensemble roulant visé dans ce paragraphe.

## Revendications

1. Extenseur (1) flexible pour ensemble roulant, ledit ensemble roulant comprenant un pneumatique (2) ayant deux bourrelets (21), une jante (3) et au moins un extenseur (1) destiné à assurer une liaison flexible radialement entre l'un des bourrelets (21) et la jante (3), ladite jante (3) ayant deux sièges sur jante (31), chaque siège sur jante (31) étant prolongé axialement vers l'extérieur par un rebord de jante (32), ledit siège sur jante ayant un diamètre D3, ledit extenseur formant une pièce de révolution d'axe de rotation (DD'), ledit extenseur comprenant une extrémité axialement intérieure (10) destinée à être montée sur l'un desdits sièges sur jante et destinée à être immobilisé axialement contre le rebord de jante adjacent (32), ledit extenseur comprenant une extrémité axialement extérieure (11) et un corps (12) orienté principalement axialement et disposé entre ladite extrémité axialement extérieure (11) et ladite extrémité axialement intérieure (10), ledit corps (12) ayant une face radialement extérieure (121) et une face radialement intérieure (122), ladite extrémité axialement intérieure (10) ayant une face axialement extérieure (101) sensiblement perpendiculaire à l'axe de rotation (DD'), ledit extenseur ayant un siège sur extenseur (13) destiné à recevoir un bourrelet de pneumatique, ledit siège sur extenseur (13) étant défini par une base (131) et un épaulement (111), ledit épaulement (111) étant formé essentiellement par la face axialement intérieure de ladite extrémité axialement extérieure (11), ladite base (131) étant formée sur la face radialement extérieure (121) du corps (12), à l'extrémité axialement extérieure de celle-ci, l'intersection entre ladite base (131) et ledit épaulement (111) formant un cercle de diamètre D1, le diamètre D1 étant appelé diamètre de siège sur extenseur, **caractérisé en ce que** la différence « d » entre les diamètres D1 et D3, d=D1-D3, est comprise entre 25,9 mm et 30,4 mm.

2. Extenseur (1) flexible selon la revendication 1, **caractérisé en ce que** la différence d entre les diamètres D1 et D3, D1-D3, est comprise entre 27,8 mm et 30 mm.

3. Extenseur (1) flexible selon la revendication 1, dans lequel la largeur L mesurée entre l'épaulement (111) de l'extrémité axialement extérieure (11) et la face axialement extérieure (101) de l'extrémité axialement intérieure (10) est comprise entre 35 et 45 mm.

4. Extenseur selon la revendication 1, dans lequel ladite face radialement extérieure (121) est une face sensiblement tronconique d'angle α, **caractérisé en ce que** l'angle α est compris entre 5° et 8°.

5. Extenseur (1) flexible selon la revendication 4, dans lequel ladite face radialement intérieure (122) est une face sensiblement tronconique d'angle α', **caractérisé en ce que** la différence entre l'angle α et l'angle α' est inférieure à 2°.

6. Extenseur (1) flexible selon la revendication 5, **caractérisé en ce que** l'angle α' est identique à l'angle α.

7. Extenseur selon l'une quelconque des revendications 1 à 6, dans lequel ledit épaulement (111) est sensiblement perpendiculaire à l'axe de rotation (DD').

8. Ensemble roulant comprenant un pneumatique (2) ayant deux bourrelets (21), une jante (3) et au moins un extenseur flexible (1) selon la revendication 1 destiné à assurer la jonction entre l'un des bourrelets (21) et la jante (3).

## Patentansprüche

1. Flexibler Expander (1) für eine rollende Einheit, wobei die rollende Einheit einen Luftreifen (2) mit zwei Wülsten (21), einer Felge (3) und mindestens einem Expander (1) enthält, der dazu bestimmt ist, eine radial flexible Verbindung zwischen einem der Wülste (21) und der Felge (3) zu gewährleisten, wobei die Felge (3) zwei Felgensitze (31) hat, wobei jeder Felgensitz (31) axial nach außen von einem Felgenhorn (32) verlängert wird, wobei der Felgensitz einen Durchmesser D3 hat, wobei der Expander ein drehsymmetrisches Bauteil mit einer Drehachse (DD') bildet, wobei der Expander ein axial inneres Ende (10) enthält, das dazu bestimmt ist, auf einen der Felgensitze montiert zu werden, und dazu bestimmt ist, axial gegen das benachbarte Felgenhorn (32) blockiert zu werden, wobei der Expander ein axial äußeres Ende (11) und einen Körper (12) enthält, der hauptsächlich axial ausgerichtet und zwischen dem axial äußeren Ende (11) und dem axial inneren Ende (10) angeordnet ist, wobei der Körper (12) eine radial äußere Seite (121) und eine radial innere Seite (122) hat, wobei das axial innere Ende (10) eine axial äußere Seite (101) im Wesentlichen lotrecht zur Drehachse (DD') hat, wobei der Expander einen Expandersitz (13) hat, der dazu bestimmt ist, einen Luftreifenwulst aufzunehmen, wobei der Expandersitz (13) durch eine Basis (131) und eine Schulter (111) definiert wird, wobei die Schulter (111) im Wesentlichen durch die axial innere Seite des axial äußeren Endes (11) geformt wird, wobei die Basis (131) auf der radial äußeren Seite (121) des Körpers (12) an deren axial äußeren Ende geformt ist, wobei die Schnittlinie zwischen der Basis (131) und der Schulter (111) einen Kreis mit einem Durchmesser D1 formt, wobei der Durchmesser D1 Expandersitzdurchmesser genannt wird, **dadurch gekennzeichnet, dass** die Differenz "d" zwischen den Durchmessern D1 und D3, d=D1-D3, zwischen 25,9 mm und 30,4 mm liegt.

2. Flexibler Expander (1) nach Anspruch 1, **dadurch gekennzeichnet, dass** die Differenz d zwischen den Durchmessern D1 und D3, D1-D3, zwischen 27,8 mm und 30 mm liegt.

3. Flexibler Expander (1) nach Anspruch 1, wobei die zwischen der Schulter (111) des axial äußeren Endes (11) und der axial äußeren Seite (101) des axial inneren Endes (10) gemessene Breite L zwischen 35 und 45 mm liegt.

4. Expander nach Anspruch 1, wobei die radial äußere Seite (121) eine im Wesentlichen kegelstumpfförmige Seite mit einem Winkel α ist, **dadurch gekennzeichnet, dass** der Winkel α zwischen 5° und 8° liegt.

5. Flexibler Expander (1) nach Anspruch 4, wobei die radial innere Seite (122) eine im Wesentlichen kegelstumpfförmige Seite mit einem Winkel α' ist, **dadurch gekennzeichnet, dass** die Differenz zwischen dem Winkel α und dem Winkel α' geringer als 2° ist.

6. Flexibler Expander (1) nach Anspruch 5, **dadurch gekennzeichnet, dass** der Winkel α' gleich dem Winkel α ist.

7. Expander nach einem der Ansprüche 1 bis 6, wobei die Schulter (111) im Wesentlichen lotrecht zur Drehachse (DD') ist.

8. Rollende Einheit, die einen Luftreifen (2) enthält, der zwei Wülste (21), eine Felge (3) und mindestens einen flexiblen Expander (1) nach Anspruch 1 hat, der dazu bestimmt ist, die Verbindung zwischen einem der Wülste (21) und der Felge (3) zu gewährleisten.

## Claims

1. Flexible adapter (1) for a rolling assembly, said rolling assembly comprising a tyre (2) having two beads (21), a rim (3) and at least one adapter (1) intended to ensure a radially flexible link between one of the beads (21) and the rim (3), said rim (3) having two rim seats (31), each rim seat (31) being extended axially outwards by a rim flange (32), said rim seat having a diameter D3, said adapter forming a piece of revolution of axis of rotation (DD'), said adapter comprising an axially inner end (10) intended to be mounted on one of said rim seats and intended to be immobilized axially against the adjacent rim flange (32), said adapter comprising an axially outer end (11) and a body (12) oriented mainly axially and disposed between said axially outer end (11) and said axially inner end (10), said body (12) having a radially outer face (121) and a radially inner face (122), said axially inner end (10) having an axially outer face (101) substantially at right angles to the axis of rotation (DD'), said adapter having an adapter seat (13) intended to receive a tyre bead, said adapter seat (13) being defined by a base (131) and a shoulder (111), said shoulder (111) being formed essentially by the axially inner face of said axially outer end (11), said base (131) being formed on the radially outer face (121) of the body (12), at the axially outer end thereof, the intersection between said base (131) and said shoulder (111) forming a circle of diameter D1, the diameter D1 being called adapter seat diameter, **characterized in that** the difference "d" between the diameters D1 and D3, d=D1-D3, lies between 25.9 mm and 30.4 mm.

2. Flexible adapter (1) according to Claim 1, **characterized in that** the difference d between the diameters D1 and D3, D1-D3, lies between 27.8 mm and 30 mm.

3. Flexible adapter (1) according to Claim 1, in which the width L measured between the shoulder (111) of the axially outer end (11) and the axially outer face (101) of the axially inner end (10) lies between 35 and 45 mm.

4. Adapter according to Claim 1, in which said radially outer face (121) is a substantially tapered face of angle a, **characterized in that** the angle α lies between 5° and 8°.

5. Flexible adapter (1) according to Claim 4, in which said radially inner face (122) is a substantially tapered face of angle α', **characterized in that** the difference between the angle α and the angle α' is less than 2°.

6. Flexible adapter (1) according to Claim 5, **characterized in that** the angle α' is identical to the angle α.

7. Adapter according to any one of Claims 1 to 6, in which said shoulder (111) is substantially at right angles to the axis of rotation (DD').

8. Rolling assembly comprising a tyre (2) having two beads (21), a rim (3) and at least one flexible adapter (1) according to claim 1 intended to ensure the join between one of the beads (21) and the rim (3).
